(19) Europäisches Patentamt
European Patent Office
Office européen des brevets

(11) **EP 4 471 168 A1**

(12) **EUROPEAN PATENT APPLICATION**
published in accordance with Art. 153(4) EPC

(43) Date of publication:
04.12.2024 Bulletin 2024/49

(21) Application number: 23747105.7

(22) Date of filing: 27.01.2023

(51) International Patent Classification (IPC):
C22C 30/02 (2006.01)    C22F 1/00 (2006.01)
C22F 1/16 (2006.01)    B23K 9/167 (2006.01)

(52) Cooperative Patent Classification (CPC):
B23K 9/167; C22C 30/02; C22F 1/00; C22F 1/16

(86) International application number:
PCT/JP2023/002694

(87) International publication number:
WO 2023/145895 (03.08.2023 Gazette 2023/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.01.2022 JP 2022012214

(71) Applicant: NIPPON STEEL CORPORATION
Chiyoda-ku
Tokyo 100-8071 (JP)

(72) Inventors:
• IZAWA, Takahiro
  Tokyo 100-8071 (JP)
• TAKEDA, Kiyoko
  Tokyo 100-8071 (JP)
• TAKAGI, Takamitsu
  Tokyo 100-8071 (JP)

(74) Representative: Zimmermann & Partner
Patentanwälte mbB
Postfach 330 920
80069 München (DE)

(54) **NI-FE-CR ALLOY WELDED JOINT**

(57) An Ni-Fe-Cr alloy welded joint that has excellent intergranular corrosion resistance is provided. The Ni-Fe-Cr alloy welded joint of the present disclosure includes a pair of base metals, and a weld metal formed between the pair of the base metals. The base metals each have a chemical composition consisting of, by mass%, C: 0.005 to 0.015%, Si: 0.05 to 0.50%, Mn: 0.05 to 1.50%, P: 0.030% or less, S: 0.020% or less, Cu: 1.00 to 5.00%, Ni: 30.00 to 45.00%, Cr: 18.00 to 30.00%, Mo: 2.00 to 4.50%, Ti: 0.50 to 2.00%, and N: 0.0010 to 0.0150%, with the balance being Fe and impurities. The occupancy ratio of Cr carbides in a heat affected zone of the base metals is 0.150% or less.

FIG.1

**Description**

TECHNICAL FIELD

The present disclosure relates to an Ni-Fe-Cr alloy welded joint composed of an Ni-Fe-Cr alloy that is an alloy containing Ni, Fe and Cr.

BACKGROUND ART

Alloy materials typified by steel materials are used for chemical plant equipment at chemical plants such as oil refinery plants and petrochemical plants. Examples of the respective apparatuses included in such chemical plant equipment include a vacuum distillation unit, a direct desulfurization unit, and a catalytic reforming unit and the like. These apparatuses include a heating furnace pipe, a reactor, a tank, a heat exchanger, piping and the like. These apparatuses are welded structures that are formed by welding alloy materials.

These types of chemical plant equipment come into contact with process fluids including sulfides and/or chlorides. Therefore, the materials used in these types of equipment are required to have excellent corrosion resistance. For example, Ni-Fe-Cr alloys which mainly contain Ni, Fe and Cr are used in these types of equipment.

As mentioned above, Ni-Fe-Cr alloys used in chemical plant equipment are welded to form a part of a welded structure. Performing such welding forms a heat affected zone (HAZ) in the Ni-Fe-Cr alloy. In the heat affected zone, intergranular corrosion is liable to occur due to sensitization. Therefore, Ni-Fe-Cr alloys that are used in chemical plant equipment are required to have excellent intergranular corrosion resistance.

An Ni-Fe-Cr alloy that has excellent intergranular corrosion resistance is proposed in International Application Publication No. WO2017/168904 (Patent Literature 1).

The Ni-Fe-Cr alloy disclosed in Patent Literature 1 has a chemical composition consisting of, by mass%, C: 0.005 to 0.015%, Si: 0.05 to 0.50%, Mn: 0.05 to 1.5%, P: 0.030% or less, S: 0.020% or less, Cu: 1.0 to 5.0%, Ni: 30.0 to 45.0%, Cr: 18.0 to 30.0%, Mo: 2.0 to 4.5%, Ti: 0.5 to 2.0%, N: 0.001 to 0.015%, and Al: 0 to 0.50%, with the balance being Fe and impurities. An average grain size d ($\mu$m) satisfies Formula (1):

$$d < 4.386/(C_{rel} + 0.15) \quad (1)$$

where, $C_{rel}$ in Formula (1) is defined by Formula (2):

$$C_{rel} = C - 0.125Ti + 0.8571N \quad (2)$$

where, the content (mass%) of a corresponding element is substituted for each symbol of an element in Formula (1) and Formula (2).

It is disclosed in Patent Literature 1 that, by the relative amount of dissolved C ($C_{rel}$) and the average grain size d satisfying Formula (1), the Ni-Fe-Cr alloy disclosed in Patent Literature 1 can suppress the development of Cr-depleted zones and increase intergranular corrosion resistance.

CITATION LIST

PATENT LITERATURE

Patent Literature 1: International Application Publication No. WO2017/168904

SUMMARY OF INVENTION

TECHNICAL PROBLEM

The Ni-Fe-Cr alloy disclosed in Patent Literature 1 can increase intergranular corrosion resistance. However, intergranular corrosion resistance may also be increased by means that is different from the means proposed in Patent Literature 1.

An objective of the present disclosure is to provide an Ni-Fe-Cr alloy welded joint that has excellent intergranular corrosion resistance.

SOLUTION TO PROBLEM

An Ni-Fe-Cr alloy welded joint according to the present disclosure has a following configuration.

An Ni-Fe-Cr alloy welded joint, including:

a pair of base metals, and
a weld metal formed between the pair of the base metals,
wherein:

the base metals each consist of, by mass%,
C: 0.005 to 0.015%,
Si: 0.05 to 0.50%,
Mn: 0.05 to 1.50%,
P: 0.030% or less,
S: 0.020% or less,
Cu: 1.00 to 5.00%,
Ni: 30.00 to 45.00%,
Cr: 18.00 to 30.00%,
Mo: 2.00 to 4.50%,
Ti: 0.50 to 2.00%, and
N: 0.0010 to 0.0150%,
with the balance being Fe and impurities; and
an occupancy ratio of Cr carbides in a heat affected zone of the base metals is 0.150% or less.

ADVANTAGEOUS EFFECT OF INVENTION

The Ni-Fe-Cr alloy welded joint according to the present disclosure has excellent intergranular corrosion resistance.

BRIEF DESCRIPTION OF DRAWINGS

[FIG. 1] FIG. 1 is a view illustrating a relation between an occupancy ratio of Cr carbides in a heat affected zone of an Ni-Fe-Cr alloy welded joint, and a corrosion rate which is an index of intergranular corrosion resistance.
[FIG. 2] FIG. 2 is a plan view illustrating an example of the Ni-Fe-Cr alloy welded joint of the present embodiment.
[FIG. 3] FIG. 3 is a cross-sectional view of the Ni-Fe-Cr alloy welded joint of FIG. 2 which has been cut in a weld metal width direction.
[FIG. 4] FIG. 4 is a cross-sectional view of the Ni-Fe-Cr alloy welded joint of FIG. 2 which has been cut in a weld metal extending direction.
[FIG. 5] FIG. 5 is a cross-sectional view of the Ni-Fe-Cr alloy welded joint which has been cut in the weld metal extending direction, which is different from FIG. 4.
[FIG. 6] FIG. 6 is a cross-sectional view of the Ni-Fe-Cr alloy welded joint of the present embodiment which has been cut in a direction perpendicular to the weld metal extending direction.
[FIG. 7] FIG. 7 is a schematic diagram illustrating an example of an arbitrary observation field in the heat affected zone of the Ni-Fe-Cr alloy welded joint of the present embodiment.

DESCRIPTION OF EMBODIMENT

Hereunder, the present embodiment is described in detail with reference to the accompanying drawings. Hereinafter, the symbol "%" relating to an element means "mass percent".

The present inventors conducted studies regarding the intergranular corrosion resistance of Ni-Fe-Cr alloy welded joints. First, the present inventors considered how to increase the intergranular corrosion resistance of a welded joint from the viewpoint of the chemical composition. As a result of such studies conducted by the present inventors, the present inventors considered that if the chemical composition of a base metal of an Ni-Fe-Cr alloy welded joint consists of, by mass%, C: 0.005 to 0.015%, Si: 0.05 to 0.50%, Mn: 0.05 to 1.50%, P: 0.030% or less, S: 0.020% or less, Cu: 1.00 to 5.00%, Ni: 30.00 to 45.00%, Cr: 18.00 to 30.00%, Mo: 2.00 to 4.50%, Ti: 0.50 to 2.00%, N: 0.0010 to 0.0150%, Al: 0 to 0.50%, Nb: 0 to 0.05%, and V: 0 to 0.50%, with the balance being Fe and impurities, there is a possibility that the intergranular corrosion resistance will increase.

However, even in the case of Ni-Fe-Cr alloy welded joints including the base metal having the above chemical composition, when the present inventors conducted an intergranular corrosion resistance test, in some cases the intergranular corrosion resistance was low. Therefore, the present inventors conducted further studies regarding the intergranular corrosion resistance of a welded joint from a different viewpoint to the viewpoint of the chemical composition.

An Ni-Fe-Cr alloy welded joint includes a pair of base metals, and a weld metal that is formed between the pair of the base metals. In the base metals, a region adjacent to the weld metal is called a "heat affected zone (HAZ)". The HAZ is greatly affected by welding heat when the pair of base metals are welded to form the weld metal and thereby form a welded joint. Consequently, the grains in the HAZ are larger than the grains in the region other than the HAZ of the base metal (hereinafter, the region other than the HAZ of the base metal is referred to as a "main body portion").

In an Ni-Fe-Cr alloy welded joint having the chemical composition described above, due to the thermal history after welding, even when the content of C is a low content of 0.015% or less, $M_{23}C_6$-type Cr carbides are liable to form in the HAZ. If Cr carbides form, an amount of dissolved Cr in the HAZ will decrease. Consequently, Cr-depleted zones will develop in a vicinity of grain boundaries in the HAZ. In a Cr-depleted zone, it is difficult for a passivation film to be formed. Therefore, intergranular corrosion will easily occur.

In such Cr-depleted zones, the smaller the grain boundary area is, the easier it is for intergranular corrosion to occur in a concentrated manner. In other words, the larger the grains are, the easier it will be for a large Cr-depleted zone to develop, and the more likely it will be that intergranular corrosion will occur. In the base metal, the HAZ is the region that is most affected by the thermal effects of welding. Therefore, the grains in the HAZ become larger than the grains in the base metal. Consequently, intergranular corrosion occurs more easily in the HAZ than in the main body portion of the base metal.

Therefore, with respect to the overall welded joint, the present inventors focused their attention on, in particular, Cr carbides in the HAZ. The present inventors investigated the relation between the occupancy ratio of Cr carbides in the HAZ, and the corrosion rate which is an index of intergranular corrosion resistance. As a result, the present inventors obtained the following finding.

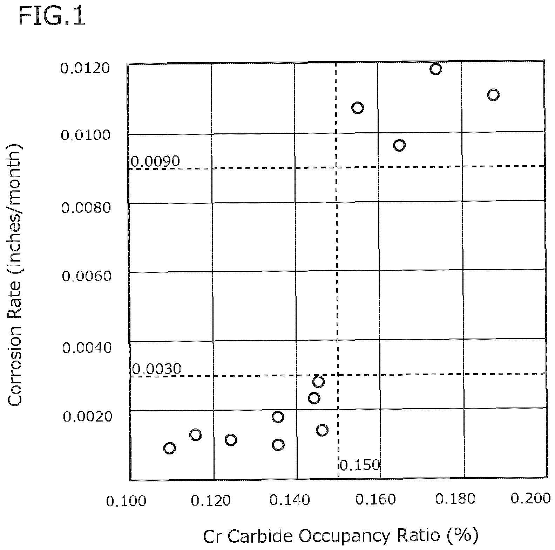

FIG. 1 is a view illustrating the relation between the occupancy ratio (%) of Cr carbides in a HAZ of an Ni-Fe-Cr alloy welded joints, and the corrosion rate (inches/month) which is an index of intergranular corrosion resistance. FIG. 1 was obtained by carrying out an intergranular corrosion resistance test (in accordance with ASTM A262 Practice C) in Examples that are described later.

Referring to FIG. 1, in an Ni-Fe-Cr alloy welded joint including a base metal having the chemical composition described above, when the Cr carbide occupancy ratio in the HAZ is 0.150% or less, the corrosion rate is 0.0030 inches/month or less. On the other hand, when the Cr carbide occupancy ratio in the HAZ is more than 0.150%, the corrosion rate markedly increases to 0.0090 inches/month or more. That is, in the graph shown in FIG. 1, the curve becomes discontinuous in the vicinity of a Cr carbide occupancy ratio of 0.150%.

Based on the above finding, the present inventors discovered that in an Ni-Fe-Cr alloy welded joint that uses a base metal having the chemical composition described above, intergranular corrosion resistance can be markedly increased by making the Cr carbide occupancy ratio in the HAZ 0.150% or less.

The Ni-Fe-Cr alloy welded joint of the present embodiment, which has been completed based on the above finding, has a following configuration.

[1] An Ni-Fe-Cr alloy welded joint, including:

a pair of base metals, and
a weld metal formed between the pair of the base metals,
wherein:

the base metals each consist of, by mass%,
C: 0.005 to 0.015%,
Si: 0.05 to 0.50%,
Mn: 0.05 to 1.50%,
P: 0.030% or less,
S: 0.020% or less,
Cu: 1.00 to 5.00%,
Ni: 30.00 to 45.00%,
Cr: 18.00 to 30.00%,
Mo: 2.00 to 4.50%,
Ti: 0.50 to 2.00%, and
N: 0.0010 to 0.0150%,

with the balance being Fe and impurities; and
an occupancy ratio of Cr carbides in a heat affected zone of the base metals is 0.150% or less.

[2] An Ni-Fe-Cr alloy welded joint, including:

a pair of base metals, and
a weld metal formed between the pair of the base metals,
wherein:

the base metals each consist of, by mass%,
C: 0.005 to 0.015%,
Si: 0.05 to 0.50%,
Mn: 0.05 to 1.50%,
P: 0.030% or less,
S: 0.020% or less,
Cu: 1.00 to 5.00%,
Ni: 30.00 to 45.00%,
Cr: 18.00 to 30.00%,
Mo: 2.00 to 4.50%,
Ti: 0.50 to 2.00%, and
N: 0.0010 to 0.0150%,
and further contain one or more types of element selected from a group consisting of a first group and a
second group,
with the balance being Fe and impurities; and
an occupancy ratio of Cr carbides in a heat affected zone of the base metals is 0.150% or less;
[first group]
Al: 0.50% or less
[second group]
one or more types of element selected from a group consisting of:

Nb: 0.05% or less, and
V: 0.50% or less.

[3] The Ni-Fe-Cr alloy welded joint according to [2], containing:
the first group.
[4] The Ni-Fe-Cr alloy welded joint according to [2] or [3], containing:
the second group.

The Ni-Fe-Cr alloy welded joint of the present embodiment has excellent intergranular corrosion resistance. Hereunder, the Ni-Fe-Cr alloy welded joint of the present embodiment is described in detail.

[Structure of welded joint]

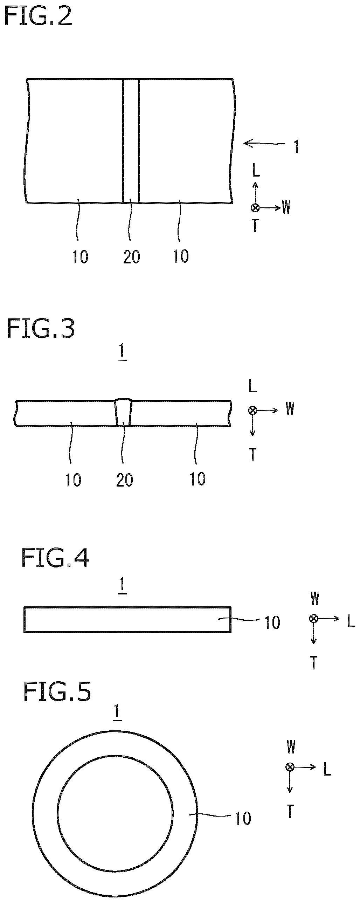

FIG. 2 is a plan view illustrating one example of an Ni-Fe-Cr alloy welded joint 1 of the present embodiment. Referring to FIG. 2, the Ni-Fe-Cr alloy welded joint 1 of the present embodiment includes a pair of base metals 10, and a weld metal 20. The weld metal 20 is formed between the pair of base metals 10. In the Ni-Fe-Cr alloy welded joint 1 of the present embodiment, the weld metal 20 is formed by melting and solidifying the pair of base metals 10.
The welding is, for example, TIG welding (Gas Tungsten Arc Welding: GTAW)
In FIG. 2, a direction in which the weld metal 20 extends is defined as a "weld metal extending direction L". A direction perpendicular to the weld metal extending direction L in plan view is defined as a "weld metal width direction W". A direction that is perpendicular to the weld metal extending direction L and the weld metal width direction W is defined as a "weld metal thickness direction T". FIG. 3 is a cross-sectional view illustrating a state in which the Ni-Fe-Cr alloy welded joint 1 shown in FIG. 2 has been cut in the weld metal width direction W. As illustrated in FIG. 2 and FIG. 3, the weld metal 20 is formed between the pair of base metals 10.
FIG. 4 is a cross-sectional view illustrating a state in which the Ni-Fe-Cr alloy welded joint 1 shown in FIG. 2 has been cut in the weld metal extending direction L. FIG. 5 is a cross-sectional view illustrating a state in which the Ni-Fe-Cr alloy welded joint 1 has been cut in the weld metal extending direction L, which is different from FIG. 4. As illustrated in FIG. 4, the base metal 10 may be a plate, or as illustrated in FIG. 5, the base metal 10 may be a pipe. Hereunder, the base metal 10 is described.

[Regarding base metal 10]

[Chemical composition]

The chemical composition of the base metal 10 of the Ni-Fe-Cr alloy welded joint of the present embodiment contains the following elements. Hereunder, the symbol "%" relating to an element means "mass percent".

C: 0.005 to 0.015%

Carbon (C) increases the strength of the alloy. If the content of C is less than 0.005%, the aforementioned advantageous effect will not be sufficiently obtained even if the contents of other elements are within the range of the present embodiment. On the other hand, if the content of C is more than 0.015%, even if the contents of other elements are within the range of the present embodiment, precipitation of Cr carbides to grain boundaries will increase, resulting in a decrease in the intergranular corrosion resistance. Therefore, the content of C is to be 0.005 to 0.015%.
A preferable lower limit of the content of C is 0.007%, and more preferably is 0.008%. A preferable upper limit of the content of C is 0.014%, more preferably is 0.013%, further preferably is 0.012%, and further preferably is 0.010%.

Si: 0.05 to 0.50%

Silicon (Si) deoxidizes the alloy. If the content of Si is less than 0.05%, the aforementioned advantageous effect will not be sufficiently obtained even if the contents of other elements are within the range of the present embodiment. On the other hand, if the content of Si is more than 0.50%, inclusions will easily form. In such a case, the toughness of the alloy will decrease even if the contents of other elements are within the range of the present embodiment. Therefore, the content of Si is to be 0.05 to 0.50%.
A preferable lower limit of the content of Si is 0.10%, more preferably is 0.15%, and further preferably is 0.20%. A preferable upper limit of the content of Si is 0.45%, more preferably is 0.40%, and further preferably is 0.35%.

Mn: 0.05 to 1.50%

Manganese (Mn) stabilizes the austenite phase. In addition, Mn deoxidizes the alloy. If the content of Mn is less than 0.05%, the aforementioned advantageous effects will not be sufficiently obtained even if the contents of other elements are within the range of the present embodiment. On the other hand, if the content of Mn is more than 1.50%, Mn will combine with S to form a sulfide. In such a case, even if the contents of other elements are within the range of the present embodiment, the corrosion resistance (in particular, the pitting resistance) of the alloy will decrease. Therefore, the content of Mn is to be 0.05 to 1.50%.
A preferable lower limit of the content of Mn is 0.15%, more preferably is 0.30%, and further preferably is 0.40%. A preferable upper limit of the content of Mn is 1.30%, more preferably is 1.10%, and further preferably is 0.90%.

P: 0.030% or less

Phosphorus (P) is an impurity that is unavoidably contained. In other words, the content of P is more than 0%. P segregates to grain boundaries during weld solidification, thereby increasing the crack susceptibility of the HAZ. Therefore, the content of P is to be 0.030% or less.
The content of P is preferably as low as possible. However, if the content of P is excessively lowered, the production cost will increase. Therefore, when taking normal industrial production into consideration, a preferable lower limit of the content of P is 0.001%, and more preferably is 0.002%. A preferable upper limit of the content of P is 0.025%, more preferably is 0.020%, and further preferably is 0.015%.

S: 0.020% or less

Sulfur (S) is an impurity that is unavoidably contained. In other words, the content of S is more than 0%. Similarly to P, S segregates to grain boundaries during weld solidification, thereby increasing the crack susceptibility of the HAZ. In addition, S forms MnS, which decreases the pitting resistance of the alloy. Therefore, the content of S is to be 0.020% or less.
The content of S is preferably as low as possible. However, if the content of S is excessively lowered, the production cost will increase. Therefore, when taking normal industrial production into consideration, a preferable lower limit of the content of S is 0.001%, and more preferably is 0.002%. A preferable upper limit of the content of S is 0.015%, more preferably is 0.010%, and further preferably is 0.005%.

Cu: 1.00 to 5.00%

Copper (Cu) increases the corrosion resistance of the alloy. If the content of Cu is less than 1.00%, the aforementioned advantageous effect will not be sufficiently obtained even if the contents of other elements are within the range of the present embodiment. On the other hand, if the content of Cu is more than 5.00%, even if the contents of other elements are within the range of the present embodiment, the hot workability of the alloy will decrease. Therefore, the content of Cu is to be 1.00 to 5.00%.

A preferable lower limit of the content of Cu is 1.20%, more preferably is 1.40%, and further preferably is 1.60%. A preferable upper limit of the content of Cu is 4.50%, more preferably is 4.00%, and further preferably is 3.50%.

Ni: 30.00 to 45.00%

Nickel (Ni) increases the corrosion resistance of the alloy. If the content of Ni is less than 30.00%, the aforementioned advantageous effect will not be sufficiently obtained even if the contents of other elements are within the range of the present embodiment. On the other hand, if the content of Ni is more than 45.00%, even if the contents of other elements are within the range of the present embodiment, the aforementioned advantageous effect will be saturated, and the production cost will increase. Therefore, the content of Ni is to be 30.00 to 45.00%.

A preferable lower limit of the content of Ni is 32.00%, more preferably is 34.00%, further preferably is 36.00%, and further preferably is 38.00%. A preferable upper limit of the content of Ni is 44.50%, more preferably is 44.00%, and further preferably is 43.50%.

Cr: 18.00 to 30.00%

Chromium (Cr) increases the corrosion resistance of the alloy. If the content of Cr is less than 18.00%, the aforementioned advantageous effect will not be sufficiently obtained even if the contents of other elements are within the range of the present embodiment. On the other hand, if the content of Cr is more than 30.00%, even if the contents of other elements are within the range of the present embodiment, the stability of the austenite will decrease, and the high temperature strength of the alloy will decrease. Therefore, the content of Cr is to be 18.00 to 30.00%.

A preferable lower limit of the content of Cr is 19.00%, more preferably is 20.00%, further preferably is 20.50%, and further preferably is 21.00%. A preferable upper limit of the content of Cr is 28.00%, more preferably is 26.00%, and further preferably is 24.00%.

Mo: 2.00 to 4.50%

Molybdenum (Mo) increases the corrosion resistance of the alloy. If the content of Mo is less than 2.00%, the aforementioned advantageous effect will not be sufficiently obtained even if the contents of other elements are within the range of the present embodiment.

On the other hand, if the content of Mo is more than 4.50%, even if the contents of other elements are within the range of the present embodiment, Mo will form Laves phases at grain boundaries, which will decrease the corrosion resistance of the alloy. Therefore, the content of Mo is to be 2.00 to 4.50%.

A preferable lower limit of the content of Mo is 2.20%, more preferably is 2.40%, further preferably is 2.60%, and further preferably is 2.80%. A preferable upper limit of the content of Mo is 4.30%, more preferably is 4.00%, further preferably is 3.70%, and further preferably is 3.50%.

Ti: 0.50 to 2.00%

Titanium (Ti) forms Ti carbides and thereby fixes C, which increases the intergranular corrosion resistance of the alloy. If the content of Ti is less than 0.50%, the aforementioned advantageous effect will not be sufficiently obtained even if the contents of other elements are within the range of the present embodiment. On the other hand, if the content of Ti is more than 2.00%, the hot workability of the alloy will decrease even if the contents of other elements are within the range of the present embodiment. Therefore, the content of Ti is to be 0.50 to 2.00%.

A preferable lower limit of the content of Ti is 0.60%, and more preferably is 0.70%. A preferable upper limit of the content of Ti is 1.80%, more preferably is 1.50%, and further preferably is 1.30%.

N: 0.0010 to 0.0150%

Nitrogen (N) forms fine carbo-nitrides in grains, and thereby increases the strength of the alloy. If the content of N is less than 0.0010%, the aforementioned advantageous effect will not be sufficiently obtained even if the contents of other elements are within the range of the present embodiment. On the other hand, if the content of N is more than 0.0150%, even if the contents of other elements are within the range of the present embodiment, N will combine with Ti to form TiN, and will thereby hinder the formation of Ti carbides. In such a case, dissolved C will remain in the alloy. Consequently, Cr carbides will easily form at grain boundaries during welding, and the intergranular corrosion resistance will decrease. Therefore, the content of N is to be 0.0010 to 0.0150%.

A preferable lower limit of the content of N is 0.0020%, more preferably is 0.0040%, and further preferably is 0.0060%. A preferable upper limit of the content of N is 0.0130%, more preferably is 0.0110%, and further preferably is 0.0090%.

The balance of the chemical composition of the base metal 10 of the Ni-Fe-Cr alloy welded joint according to the present embodiment is Fe and impurities. Here, the term "impurities" refers to substances which are mixed in from ore and scrap as the raw material or from the production environment or the like when industrially producing the Ni-Fe-Cr alloy (the base metal 10), and which are substances that are not intentionally contained but are permitted within a range that does not adversely affect the Ni-Fe-Cr alloy (the base metal 10) of the present embodiment.

[Regarding optional elements]

The Ni-Fe-Cr alloy welded joint of the present embodiment may further contain one or more types of element selected from the group consisting of the following first group and second group in lieu of a part of Fe.

[First group] Al

[Second group] One or more types of element selected from the group consisting of Nb and V.

The first group and the second group are described hereunder.

[First group: Al]

Al: 0.50% or less

Aluminum (Al) is an optional element, and does not have to be contained. That is, the content of Al may be 0%. When contained, Al deoxidizes the alloy. If even a small amount of Al is contained, the aforementioned advantageous effect will be obtained to a certain extent. However, if the content of Al is more than 0.50%, even if the contents of other elements are within the range of the present embodiment, inclusions will excessively form and the workability and ductility of the alloy will decrease. Therefore, the content of Al is to be 0 to 0.50%. When contained, the content of Al is to be 0.50% or less.

A preferable lower limit of the content of Al is 0.01%, more preferably is 0.05%, further preferably is 0.10%, further preferably is 0.15%, and further preferably is 0.20%. A preferable upper limit of the content of Al is 0.45%, more preferably is 0.40%, and further preferably is 0.35%.

In the present description, the content of Al means the content of sol. Al (acid-soluble Al).

[Second group: Nb and V]

Nb: 0.05% or less

Niobium (Nb) is an optional element, and does not have to be contained. That is, the content of Nb may be 0%. When contained, Nb combines with C to form carbides. As a result, formation of Cr carbides at grain boundaries is suppressed, and the intergranular corrosion resistance increases. If even a small amount of Nb is contained, the aforementioned advantageous effect will be obtained to a certain extent. However, if the content of Nb is more than 0.05%, an excessively large amount of carbides will form, even if the contents of other elements are within the range of the present embodiment. In such a case, the hot cracking susceptibility in the heat affected zone (HAZ) will increase. Therefore, the content of Nb is to be 0 to 0.05%. When contained, the content of Nb is to be 0.05% or less.

A preferable lower limit of the content of Nb is 0.01%, and more preferably is 0.02%. A preferable upper limit of the content of Nb is 0.04%, and more preferably is 0.03%.

V: 0.50% or less

Vanadium (V) is an optional element, and does not have to be contained. That is, the content of V may be 0%. When contained, V combines with C to form carbides. As a result, formation of Cr carbides is suppressed, and the intergranular corrosion resistance of the alloy increases. If even a small amount of V is contained, the aforementioned advantageous effect will be obtained to a certain extent. However, if the content of V is more than 0.50%, even if the contents of other elements are within the range of the present embodiment, an excessively large amount of V carbides will form in the grains. In such a case, the strength within the grains will become excessively high, and the strength difference between the inside of the grains and the grain boundaries will be large. Consequently, stress concentration will occur at grain boundary interfaces, and weld cracks or embrittlement cracks will easily occur. Therefore, the content of V is to be 0 to 0.50%. When contained, the content of V is to be 0.50% or less.

A preferable lower limit of the content of V is 0.01%, more preferably is 0.02%, further preferably is 0.04%, and further preferably is 0.06%. A preferable upper limit of the content of V is 0.45%, more preferably is 0.40%, further preferably is 0.35%, and further preferably is 0.30%.

[Regarding weld metal 20]

As described above, the weld metal 20 is formed by melting and solidifying ends of the pair of the base metals 10. Therefore, the chemical composition of the weld metal 20 is the same as the chemical composition of the base metal 10. That is, the chemical composition of the weld metal 20 consists of, by mass%, C: 0.005 to 0.015%, Si: 0.05 to 0.50%, Mn: 0.05 to 1.50%, P: 0.030% or less, S: 0.020% or less, Cu: 1.00 to 5.00%, Ni: 30.00 to 45.00%, Cr: 18.00 to 30.00%, Mo: 2.00 to 4.50%, Ti: 0.50 to 2.00%, N: 0.0010 to 0.0150%, Al: 0 to 0.50%, Nb: 0 to 0.05%, and V: 0 to 0.50%, with the balance being Fe and impurities.

[Regarding occupancy ratio of Cr carbides in HAZ]

In the Ni-Fe-Cr alloy welded joint 1 of the present embodiment, in addition, the occupancy ratio of Cr carbides in the heat affected zone (HAZ) of the base metal 10 is 0.150% or less. Here, the occupancy ratio of Cr carbides in the HAZ is defined as follows.

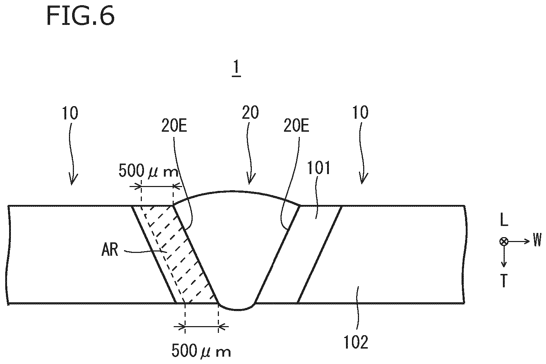

FIG. 6 is a view illustrating a cross section in a direction perpendicular to the weld metal extending direction L (that is, the weld metal width direction W) in the Ni-Fe-Cr alloy welded joint 1 of the present embodiment. Referring to FIG. 6, each base metal 10 includes a heat affected zone (HAZ) 101, and a main body portion 102 that is the portion other than the HAZ 101. In the base metal 10, the HAZ 101 is a region that is adjacent to a fusion line 20E of the weld metal 20, and is a portion that receives thermal effects during welding. On the other hand, the main body portion 102 is a portion that substantially does not receive thermal effects during welding. Note that, in a cross section perpendicular to the weld metal extending direction L, the contrast of the HAZ 101 is different from the contrast of the main body portion 102. Therefore, in the aforementioned cross section, the HAZ 101 can be easily recognized.

Referring to FIG. 6, in the cross section in the direction perpendicular to the weld metal extending direction L, in the base metal 10, a range of 500 $\mu$m (the region hatched with broken lines in FIG. 6) in the weld metal width direction W from the fusion line 20E of the weld metal 20 is defined as a "range AR". The range AR is one part of the HAZ 101. Circular observation fields which each have a diameter of 500 $\mu$m are selected at 10 places from the range AR.

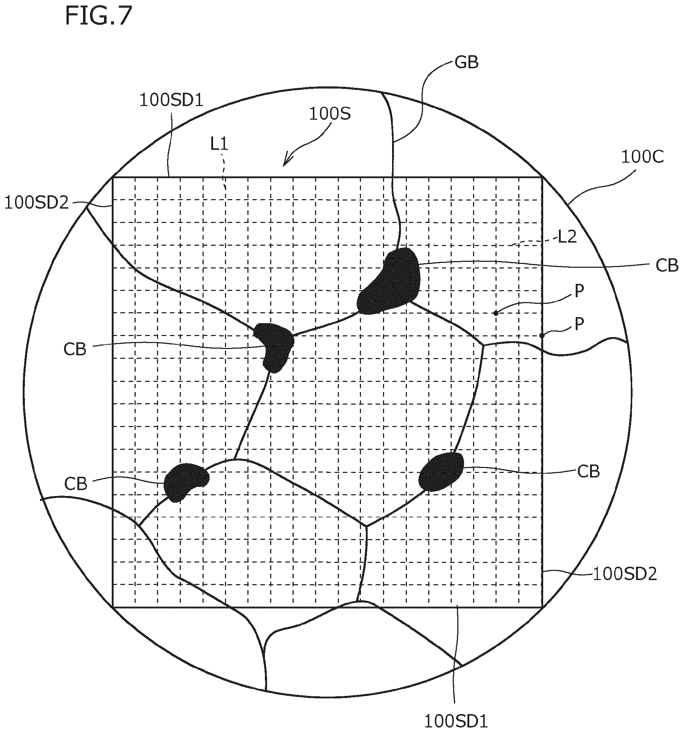

FIG. 7 is a schematic diagram illustrating one example of the observation field. Referring to FIG. 7, in an observation field 100C, grain boundaries GB are present in the HAZ 101, and Cr carbides CB may be present on the grain boundaries GB. Here, it will be assumed that a square 100S is inscribed in the circular observation field 100C. The square 100S includes a pair of first sides 100SD1 that are parallel to each other, and a pair of second sides 100SD2 that are parallel to each other. The first sides 100SD1 adjoin the second sides 100SD2, with the extending direction of the first sides 100SD1 being orthogonal to the extending direction of the second sides 100SD2.

Here, inside the square 100S, a plurality of line segments L1 are arranged which extend parallel to the second sides 100SD2 and which divide each of the first sides 100SD1 into 19 equal parts. Similarly, a plurality of line segments L2 are arranged which extend parallel to the first sides 100SD1 and which divide each of the second sides 100SD2 into 19 equal parts. That is, the square 100S is partitioned into 19 × 19 minute squares by the plurality of line segments L1 and the plurality of line segments L2.

Intersection points between the line segments L1 and L2, intersection points between the first sides 100SD1 and the line segments L1, intersection points between the second sides 100SD2 and the line segments L2, and intersection points between the first sides 100SD1 and the second sides 100SD2 (in other words, vertices of the square 100S) are each defined as a "lattice point P". At this time, the number of lattice points P of the square 100S is 400 (20 × 20).

Among the lattice points P (400 in total) within each observation field 100C, the number of lattice points P that overlap with a Cr carbide CB are counted. The ratio of the total number of lattice points P which overlap with a Cr carbide CB in the ten observation fields 100C to the total number of lattice points P (400 × 10) in the ten observation fields 100C is defined as the occupancy ratio (%) of Cr carbides in the HAZ 101. That is, the occupancy ratio of Cr carbides in the HAZ 101 is defined by the following equation.

Occupancy ratio of Cr carbides (%) = (total number of lattice points P overlapping with Cr carbides CB in ten observation fields/total number of lattice points P in ten observation fields) × 100

As described above, in the present embodiment, in the HAZ 101 at a cross section perpendicular to the weld metal extending direction L of the Ni-Fe-Cr alloy welded joint 1, circular observation fields 100C having a diameter of 500 μm are selected at 10 places within the range AR that is a range of 500 μm in the weld metal width direction W from the fusion line 20E of the weld metal 20, and in addition, in the square 100S inscribed in each of the observation fields 100C, the plurality of line segments L 1 and L2 are drawn that equally divide each of the pair of first sides 100SD1 and each of the pair of second sides 100SD2 which are orthogonal to the pair of first sides 100SD1 into 19 equal parts. When the intersection points between the first sides 100SD1, the second sides 100SD2, the line segments L1, and the line segments L2 are defined as the lattice points P, the ratio of the total number of lattice points P that overlap with a Cr carbide CB in the ten observation fields 100C to the total number of the plurality of lattice points P included in the ten observation fields 100C is defined as the "occupancy ratio of Cr carbides" (%).

Referring to FIG. 1, if the occupancy ratio of Cr carbides CB in the HAZ 101 is more than 0.150%, the corrosion rate will markedly increase, and even in the case of the Ni-Fe-Cr alloy welded joint 1 in which the content of each element in the chemical composition of the base metal 10 is within the range of the present embodiment, the intergranular corrosion resistance will markedly decrease. On the other hand, if the occupancy ratio of Cr carbides CB in the HAZ 101 is 0.150% or less, on the precondition that the content of each element in the chemical composition of the base metal 10 is within the range of the present embodiment, the corrosion rate will be 0.0030 inches/month or less, and excellent intergranular corrosion resistance will be obtained.

A preferable upper limit of the occupancy ratio of Cr carbides CB is 0.145%, and more preferably is 0.140%. The occupancy ratio of Cr carbides CB is preferably as low as possible. However, because C is contained in an amount of 0.005% or more in order to secure the strength of the alloy, Cr carbides CB will inevitably form in the HAZ 101. Therefore, a preferable lower limit of the occupancy ratio of Cr carbides CB is more than 0%, more preferably is 0.001%, further preferably is 0.010%, further preferably is 0.050%, and further preferably is 0.100%.

[Method for measuring occupancy ratio of Cr carbides]

The occupancy ratio of Cr carbides is measured by the following method.

A sample including a cross section perpendicular to the weld metal extending direction L of the weld metal 20 of the Ni-Fe-Cr alloy welded joint 1 is extracted (hereunder, this cross section is referred to as an "observation surface"). The observation surface of the extracted sample is mirror-polished. After the mirror polishing, etching is performed using Kalling's reagent (copper (II) chloride-ethyl alcohol-hydrochloric acid-distilled water). On the etched observation surface, observation of the range AR is performed using an optical microscope with a magnification of 400×, and arbitrary circular observation fields 100C that each have a diameter of 500 μm are selected at 10 places.

Cr carbides within the observation fields 100C are identified by the following method. In the Ni-Fe-Cr alloy welded joint 1, precipitates for which there is a possibility that the precipitates will be formed within the observation fields 100C are mainly Ti-based precipitates and Cr carbides. Ti-based precipitates and Cr carbides can be easily distinguished from each other based on their shapes. Specifically, Ti-based precipitates have a polygonal shape. On the other hand, Cr carbides have a shape with rounded corners. Therefore, Ti-based precipitates and Cr carbides can be easily distinguished from each other. Note that, although there is a possibility that Nb-based precipitates may be formed within the observation fields 100C, the amount of Nb-based precipitates is negligibly small compared to Cr carbides. In addition, Nb-based precipitates do not form on the grain boundaries. Therefore, within the observation fields 100C, precipitates having a shape with rounded corners are regarded as Cr carbides. Note that, Cr carbides may also be identified by observing the observation field 100C using an SEM, and subjecting each precipitate to crystal structure analysis using an EDX.

The method described above is used to count the number of lattice points P overlapping with Cr carbides CB among the plurality of lattice points P in each observation field 100C. The ratio of the total number of lattice points P that overlap with the Cr carbide CB in the ten observation fields 100C to the total number of the plurality of lattice points P included in the ten observation fields 100C is defined as the occupancy ratio (%) of Cr carbides CB in the HAZ 101.

[Average grain size in main body portion 102 and HAZ 101]

Note that, in the base metal 10, the average grain size in the main body portion 102 is smaller than the average grain size in the HAZ 101. The average grain size is not particularly limited. The average grain size in the main body portion 102 of the base metal 10 is, for example, 40 to 100 μm. The average grain size in the range AR in the HAZ 101 is, for example, 70 to 150 μm.

[Method for measuring average grain size]

The average grain size in the main body portion 102 and in the HAZ 101 can be measured by the following method. A sample is taken from the main body portion 102 of the base metal 10 at a cross section perpendicular to the weld metal extending direction L of the weld metal 20 of the Ni-Fe-Cr alloy welded joint 1. In addition, in the HAZ 101 of the base metal 10, a sample is taken from the range AR that is within a range of 500 $\mu$m from the fusion line in the weld metal width direction W. In each sample, a cross section perpendicular to the weld metal extending direction L of the Ni-Fe-Cr alloy welded joint 1 is adopted as an observation surface. The observation surface is mirror-polished. The mirror-polished observation surface is subjected to etching using Kalling's reagent. The etched observation surface is observed with an optical microscope to determine the average grain size ($\mu$m) in the main body portion 102, and the average grain size ($\mu$m) in the HAZ 101. The observation field on the observation surface of the main body portion 102 is set at a position corresponding to the center of the main body portion 102 in the weld metal thickness direction T, and is set as a circular shape with a diameter of 500 $\mu$m. The observation field on the observation surface of the HAZ 101 is set at a position corresponding to the center of the range AR in the weld metal thickness direction T, and is set as a circular shape with a diameter of 500 $\mu$m.

Each grain included in each observation field is identified. The major axis and minor axis of each identified grain are determined. Specifically, orthogonal axes X and Y are defined with the center of the observation field as the origin. For all of the grains that intersect the orthogonal axes X and Y, the long side and the short side of the respective grains are measured. In each grain, the longest line segment among line segments that connect two different points on the grain boundary of the grain is defined as the long side. Among the line segments that connect two different points on the grain boundary of the grain, the longest line segment that is orthogonal to the long side is defined as the short side. The arithmetic average value of a long side length and a short side length of all grains measured in the observation field of the main body portion 102 is taken as an average grain size ($\mu$m) of the main body portion 102. The arithmetic average value of a long side length and a short side length of all grains measured in the observation field of the HAZ 101 is taken as the average grain size ($\mu$m) of the HAZ 101.

[Shape of Ni-Fe-Cr alloy welded joint 1]

The shape of the Ni-Fe-Cr alloy welded joint 1 of the present embodiment is not particularly limited. The Ni-Fe-Cr alloy welded joint 1 may be a plate shape or may be a pipe shape.

[Uses of Ni-Fe-Cr alloy welded joint 1]

The Ni-Fe-Cr alloy welded joint 1 of the present embodiment is suitable for use in chemical plant equipment. Examples of chemical plant equipment include apparatuses that are used in oil refinery plants and petrochemical plants, for example, apparatuses such as heating furnace pipes, tanks, and piping.

[Production method]

Hereunder, a method for producing the Ni-Fe-Cr alloy welded joint 1 of the present embodiment is described. The method for producing the Ni-Fe-Cr alloy welded joint 1 described hereunder is merely one example of a method for producing the Ni-Fe-Cr alloy welded joint 1. Accordingly, the Ni-Fe-Cr alloy welded joint 1 that is composed as described above may also be produced by another production method that is different from the production method described hereinafter. However, the production method described hereinafter is a preferable example of the method for producing the Ni-Fe-Cr alloy welded joint 1 of the present embodiment.

One example of the method for producing the Ni-Fe-Cr alloy welded joint 1 includes the following processes.

(Process 1) Base metal preparation process of preparing base metal 10
(Process 2) Welding process of performing welding to produce Ni-Fe-Cr alloy welded joint 1

Hereunder, each process is described.

[(Process 1) Base metal preparation process]

In the base metal preparation process, the base metal 10 having the chemical composition described above is prepared. As described above, the base metal 10 may be an alloy plate or may be an alloy pipe. The base metal 10 may be a base metal which a party who performs the welding process that is described later procured as a product, or may be a base metal which a party who performs the welding process produced.

In the case of producing the base metal 10, the base metal preparation process includes the following processes.

(Process 11) Preparation process of preparing starting material
(Process 12) Hot working process of performing hot working on starting material to produce base metal 10
(Process 13) As necessary, cold working process of performing cold working on base metal 10 after hot working process
(Process 14) As necessary, solution heat treatment process of performing solution heat treatment on base metal 10 after hot working process or after cold working process

The cold working process and the solution heat treatment process may be omitted. In other words, the cold working process and the solution heat treatment process are optional processes. Hereunder, the base metal preparation process in the case of producing the base metal 10 is described.

[(Process 11) Preparation process]

A molten alloy satisfying the chemical composition described above is produced. For example, the aforementioned molten alloy is produced using an electric furnace, an AOD (Argon Oxygen Decarburization) furnace, or a VOD (Vacuum Oxygen Decarburization) furnace. As necessary, the produced molten alloy is subjected to a well-known degassing treatment. The molten alloy subjected to the degassing treatment is used to produce a starting material. The method for producing the starting material is, for example, a continuous casting process. A continuous casting material (starting material) is produced by the continuous casting process. The continuous casting material is, for example, a slab, a bloom, or a billet. The molten alloy may also be used to produce an ingot by an ingot-making process.

[(Process 12) Hot working process]

The prepared starting material (continuous casting material or ingot) is subjected to hot working to produce the base metal 10. For example, the starting material is subjected to hot rolling to produce an alloy plate as the base metal 10. Alternatively, the starting material is subjected to hot extrusion or hot piercing-rolling or the like to produce an alloy pipe as the base metal 10. The specific method for performing the hot working is not particularly limited, and it suffices to perform hot working according to the shape of the end product. A working end temperature of the hot working is, for example, 900°C or more, and more preferably is 950°C or more. As used herein, the term "working end temperature" means a temperature of the base metal 10 immediately after the final hot working is completed.

[(Process 13) Cold working process]

As necessary, the base metal 10 after the hot working process may be subjected to cold working. That is, the cold working process may be omitted. If the base metal 10 is an alloy pipe, the cold working is, for example, cold drawing or cold rolling. If the base metal 10 is an alloy plate, the cold working is, for example, cold rolling or the like.

[(Process 14) Solution heat treatment process]

After the hot working process, or after the cold working process, as necessary, the base metal 10 is subjected to a well-known solution heat treatment. In the solution heat treatment process, the microstructure is homogenized and carbonitrides are dissolved. A preferable solution heat treatment temperature is 1000 to 1250°C. A holding time at the aforementioned solution heat treatment temperature during the solution heat treatment is not particularly limited, and for example is 2 minutes to 60 minutes.

Note that, instead of performing the aforementioned solution heat treatment, the base metal 10 produced by the hot working process may be subjected to rapid cooling immediately after the hot working. In such a case, the working end temperature of the hot working is preferably set to 1000°C or more.

[(Process 2) Welding process]

The prepared base metal 10 is subjected to welding to produce the Ni-Fe-Cr alloy welded joint 1.

In the welding process, mutually facing ends of the pair of the base metals 10 are butted together, and the butted ends are welded together. In the Ni-Fe-Cr alloy welded joint 1 of the present embodiment, a welding material is not used, and the base metals 10 are melted and solidified to form the weld metal 20. The welding method is, for example, TIG welding (GTAW).

In the welding, the heat input is to be adjusted to less than 8.0 kJ/cm. If the heat input is 8.0 kJ/cm or more, the occupancy ratio of Cr carbides in the HAZ will be more than 0.150% due to the thermal history of the welding. Therefore, the heat input during welding is to be less than 8.0 kJ/cm. Note that, if the heat input during welding is too small, an amount of heat input to the weld metal 20 will be insufficient. In such a case, a welding point will not be melted sufficiently. In this case, a lack of fusion will occur in the weld metal 20. Therefore, the heat input is to be 5.0 kJ/cm or more.

A preferable lower limit of the heat input is 5.5 kJ/cm, and more preferably is 5.8 kJ/cm. A preferable upper limit of the heat input is 7.8 kJ/cm, and more preferably is 7.6 kJ/cm.

The Ni-Fe-Cr alloy welded joint 1 of the present embodiment can be produced by the production method described above.

EXAMPLES

Hereunder, advantageous effects of one aspect of the Ni-Fe-Cr alloy welded joint of the present disclosure are described more specifically by way of examples. Conditions adopted in the examples are one example of conditions adopted for confirming the feasibility and advantageous effects of the Ni-Fe-Cr alloy welded joint of the present disclosure. The Ni-Fe-Cr alloy welded joint of the present disclosure is not limited to this example of conditions. Various conditions can be adopted with respect to the Ni-Fe-Cr alloy welded joint of the present disclosure as long as the objective of the present disclosure is achieved without departing from the gist of the present disclosure.

Ni-Fe-Cr alloys (corresponding to base metals) having the chemical compositions of Test No. 1 to Test No. 12 shown in Table 1-1 and Table 1-2 were produced. Specifically, ingots of alloys having the chemical compositions shown in Table 1 were produced by vacuum melting.

[Table 1-1]

TABLE1-1

| Test Number | Chemical Composition (unit is mass%; balance is Fe and impurities) | | | | | | |
|---|---|---|---|---|---|---|---|
| | C | Si | Mn | P | S | Cu | Ni |
| 1 | 0.010 | 0.15 | 0.63 | 0.020 | <0.002 | 1.72 | 39.42 |
| 2 | 0.009 | 0.45 | 0.67 | 0.010 | <0.002 | 1.87 | 41.19 |
| 3 | 0.009 | 0.24 | 0.61 | 0.010 | <0.002 | 2.21 | 40.74 |
| 4 | 0.010 | 0.32 | 0.66 | 0.010 | <0.002 | 1.74 | 41.90 |
| 5 | 0.010 | 0.32 | 0.68 | 0.020 | <0.002 | 2.64 | 39.79 |
| 6 | 0.015 | 0.30 | 0.07 | 0.020 | <0.002 | 2.01 | 31.09 |
| 7 | 0.006 | 0.44 | 1.48 | 0.010 | <0.002 | 4.92 | 34.88 |
| 8 | 0.009 | 0.28 | 0.59 | 0.020 | 0.004 | 1.04 | 30.37 |
| 9 | 0.013 | 0.41 | 0.52 | 0.010 | <0.002 | 1.83 | 40.77 |
| 10 | 0.012 | 0.30 | 0.88 | 0.020 | <0.002 | 1.64 | 38.12 |
| 11 | 0.009 | 0.27 | 0.71 | 0.020 | <0.002 | 1.77 | 40.16 |
| 12 | 0.013 | 0.19 | 0.65 | 0.020 | <0.002 | 1.98 | 40.42 |

[Table 1-2]

TABLE1-2

| Test Number | Chemical Composition (unit is mass%; balance is Fe and impurities) | | | | | | |
|---|---|---|---|---|---|---|---|
| | Cr | Mo | Ti | N | Al | Nb | V |
| 1 | 19.53 | 3.00 | 0.59 | 0.0080 | 0.08 | 0.04 | 0.15 |

(continued)

| Test Number | Chemical Composition (unit is mass%; balance is Fe and impurities) | | | | | | |
|---|---|---|---|---|---|---|---|
| | Cr | Mo | Ti | N | Al | Nb | V |
| 2 | 21.39 | 2.77 | 0.59 | 0.0091 | 0.10 | - | 0.12 |
| 3 | 21.37 | 3.00 | 0.61 | 0.0089 | 0.11 | 0.01 | 0.14 |
| 4 | 21.51 | 3.05 | 0.63 | 0.0090 | - | - | - |
| 5 | 20.91 | 2.78 | 0.63 | 0.0070 | 0.10 | - | 0.11 |
| 6 | 20.28 | 209 | 1.92 | 0.0127 | 0.47 | 0.05 | 0.45 |
| 7 | 29.94 | 2.99 | 0.81 | 0.0101 | 0.12 | 0.04 | - |
| 8 | 24.64 | 4.39 | 1.12 | 0.0146 | 0.37 | 0.01 | 0.44 |
| 9 | 21.41 | 2.78 | 0.63 | 0.0090 | 0.09 | 0.02 | 0.14 |
| 10 | 21.40 | 303 | 0.59 | 0.0085 | 0.10 | 0.03 | 0.19 |
| 11 | 19.76 | 2.79 | 0.63 | 0.0070 | 0.14 | - | 0.09 |
| 12 | 22.01 | 2.86 | 0.55 | 0.0074 | - | - | - |

The symbol "-" in the column "Chemical Composition" in Table 1 means that the content of the corresponding element was 0% in the significant figures (numerical value to the least significant digit) defined in the embodiment. In other words, the symbol "-" means that the content of the corresponding element was 0% when a fraction in the significant figures (numerical value to the least significant digit) defined in the aforementioned embodiment was rounded off.

For example, for the content of Al, the significant figures defined in the present embodiment are figures up to the second decimal place. Therefore, in the case of the content of Al of Test No. 4, the symbol "-" means that the content was 0% when the value of the third decimal place was rounded off. Similarly, for the content of Nb, the significant figures defined in the present embodiment are figures up to the second decimal place. Therefore, in the case of the content of Nb of Test No. 4, the symbol "-" means that the content was 0% when the value of the third decimal place was rounded off. Note that, "<0.002" in the column for the content of S in Table 1-1 means that the content of S was less than 0.002%.

After the ingot of each test number was subjected to hot forging at 1200°C, hot rolling with an area reduction ratio of 50% was performed, and in addition, cold rolling with an area reduction ratio of 67% was performed to produce a plate with a thickness of 5 mm, a width of 80 mm, and a length of 650 mm. The plate of each test number was subjected to a solution heat treatment. The solution heat treatment temperature was 1000 to 1050°C, and the holding time at the solution heat treatment temperature was five minutes. After the holding time elapsed, each plate was water-cooled.

The produced plates of the respective test numbers were used to produce Ni-Fe-Cr alloy welded joints by the following method. TIG welding was performed using a pair of the plates of each test number. At such time, the heat input as a welding condition was adjusted as shown in Table 2. Ni-Fe-Cr alloy welded joints were produced by the above production process.

[Table 2]

TABLE2

| Test Number | Welding Condition (Heat Input) [kJ/cm] | Main Body Portion Average Grain Size (μm) | HAZ Average Grain Size (μm) | Cr Carbide Occupancy Ratio (%) | Corrosion Rate (inches/month) | Remarks |
|---|---|---|---|---|---|---|
| 1 | 7.0 | 76 | 131 | 0.145 | 0.0028 | Inventive Example of Present Invention |
| 2 | 5.0 | 82 | 137 | 0.116 | 0.0013 | Inventive Example of Present Invention |

(continued)

| Test Number | Welding Condition (Heat Input) [kJ/cm] | Main Body Portion Average Grain Size ($\mu$m) | HAZ Average Grain Size ($\mu$m) | Cr Carbide Occupancy Ratio (%) | Corrosion Rate (inches/month) | Remarks |
|---|---|---|---|---|---|---|
| 3 | 5.5 | 84 | 147 | 0.135 | 0.0010 | Inventive Example of Present Invention |
| 4 | 6.5 | 68 | 124 | 0.146 | 0.0014 | Inventive Example of Present Invention |
| 5 | 6.0 | 75 | 134 | 0.135 | 0.0018 | Inventive Example of Present Invention |
| 6 | 5.5 | 54 | 82 | 0.109 | 0.0009 | Inventive Example of Present Invention |
| 7 | 5.5 | 91 | 127 | 0.144 | 0.0023 | Inventive Example of Present Invention |
| 8 | 6.0 | 76 | 128 | 0.124 | 0.0011 | Inventive Example of Present Invention |
| 9 | 9.0 | 68 | 133 | 0.188 | 0.0111 | Comparative Example |
| 10 | 8.5 | 74 | 141 | 0.165 | 0.0096 | Comparative Example |
| 11 | 8.0 | 64 | 124 | 0.155 | 0.0107 | Comparative Example |
| 12 | 9.0 | 72 | 138 | 0.174 | 0.0118 | Comparative Example |

[Evaluation tests]

The following evaluation tests were performed using the produced Ni-Fe-Cr alloy welded joints.

(Test 1) Average grain size measurement test
(Test 2) Test to measure Cr carbide occupancy ratio
(Test 3) Intergranular corrosion resistance evaluation test

Test 1 to Test 3 are described hereunder.

[(Test 1) Average grain size measurement test]

The average grain size ($\mu$m) of the main body portion and the average grain size ($\mu$m) of the HAZ of the Ni-Fe-Cr alloy welded joint of each test number were determined based on the method described above in the section [Method for measuring average grain size].
The measurement results showed that, in each test number, the average grain size in the main body portion of the base metal was within the range of 40 to 100 $\mu$m. Further, in each test number, the average grain size in the HAZ was within the range of 70 to 150 $\mu$m. In each test number, the average grain size in the HAZ was larger than the average grain size in the main body portion of the base metal.

[(Test 2) Test to measure Cr carbide occupancy ratio]

The Cr carbide occupancy ratio (%) in the HAZ of the Ni-Fe-Cr alloy welded joint of each test number was determined based on the method described above in the section [Method for measuring occupancy ratio of Cr carbides].

[(Test 3) Intergranular corrosion resistance evaluation test]

A test specimen having a thickness of 5 mm, a width of 10 mm, and a length of 50 mm that included the weld metal was taken from the Ni-Fe-Cr alloy welded joint of each test number. A longitudinal direction of the test specimen was the direction perpendicular to the weld metal extending direction, and the weld metal was disposed at the center position in the longitudinal direction of the test specimen.

The surface of the test specimen was finished by polishing with wet 600 grit emery paper, degreased with acetone, and dried. The test specimen was subjected to an intergranular corrosion test in accordance with ASTM A262 Practice C, and the intergranular corrosion resistance of the corrosion test specimen was evaluated. Five batches of an immersion test were performed in which the test bath was boiled 65% nitric acid and the time taken for each batch was 48 hours. The corrosion loss in each of the batches was measured, and the average corrosion rate (inches/month) was calculated based on the corrosion rates in the five batches.

[Test results]

The test results are shown in Table 2.

Referring to Table 2, in Test Nos. 1 to 8, the chemical composition of the base metal was appropriate. In addition, the Cr carbide occupancy ratio in the HAZ in each of Test Nos. 1 to 8 was 0.150% or less. Therefore, in each of Test Nos. 1 to 8, the corrosion rate was 0.0030 inches/month or less, and excellent intergranular corrosion resistance was exhibited.

On the other hand, in Test Nos. 9 to 12, although the chemical composition of the base metal was appropriate, the welding condition was not appropriate, and consequently the Cr carbide occupancy ratio in the HAZ was more than 0.150%. Therefore, in each of Test Nos. 9 to 12, the corrosion rate was significantly more than 0.0030 inches/month, and the intergranular corrosion resistance was low.

An embodiment of the present invention has been described above. However, the embodiment described above is merely an example for carrying out the present invention. Therefore, the present invention is not limited to the above-described embodiment, and can be implemented by appropriately modifying the above embodiment within a range that does not depart from the gist of the present invention.

**Claims**

1. An Ni-Fe-Cr alloy welded joint, comprising:

    a pair of base metals, and
    a weld metal formed between the pair of the base metals,
    wherein:

    the base metals each consist of, by mass%,
    C: 0.005 to 0.015%,
    Si: 0.05 to 0.50%,
    Mn: 0.05 to 1.50%,
    P: 0.030% or less,
    S: 0.020% or less,
    Cu: 1.00 to 5.00%,
    Ni: 30.00 to 45.00%,
    Cr: 18.00 to 30.00%,
    Mo: 2.00 to 4.50%,
    Ti: 0.50 to 2.00%, and,
    N: 0.0010 to 0.0150%,
    with the balance being Fe and impurities; and
    an occupancy ratio of Cr carbides in a heat affected zone of the base metals is 0.150% or less.

2. An Ni-Fe-Cr alloy welded joint, comprising:

a pair of base metals, and
a weld metal formed between the pair of the base metals,
wherein:

the base metals each consist of, by mass%,
C: 0.005 to 0.015%,
Si: 0.05 to 0.50%,
Mn: 0.05 to 1.50%,
P: 0.030% or less,
S: 0.020% or less,
Cu: 1.00 to 5.00%,
Ni: 30.00 to 45.00%,
Cr: 18.00 to 30.00%,
Mo: 2.00 to 4.50%,
Ti: 0.50 to 2.00%, and
N: 0.0010 to 0.0150%,
and further comprise one or more types of element selected from a group consisting of a first group and a second group,
with the balance being Fe and impurities; and
an occupancy ratio of Cr carbides in a heat affected zone of the base metals is 0.150% or less;
[first group]
Al: 0.50% or less
[second group]
one or more types of element selected from a group consisting of:
Nb: 0.05% or less, and
V: 0.50% or less.

3. The Ni-Fe-Cr alloy welded joint according to claim 2, containing:
the first group.

4. The Ni-Fe-Cr alloy welded joint according to claim 2, containing:
the second group.

# FIG.1

FIG.2

10    20    10

FIG.3

1

10    20    10

FIG.4

1

10

FIG.5

1

10

# FIG.6

FIG.7

<div align="center">**INTERNATIONAL SEARCH REPORT**</div>

| International application No. |
|---|
| **PCT/JP2023/002694** |

**A. CLASSIFICATION OF SUBJECT MATTER**

*C22C 30/02*(2006.01)i; *C22F 1/00*(2006.01)i; *C22F 1/16*(2006.01)i; *B23K 9/167*(2006.01)i
FI: C22C30/02; C22F1/00 604; C22F1/00 623; C22F1/00 626; C22F1/00 630M; C22F1/00 640A; C22F1/00 640D; C22F1/00 640F; C22F1/00 641A; C22F1/00 641B; C22F1/00 651A; C22F1/00 683; C22F1/00 684A; C22F1/00 684C; C22F1/00 685Z; C22F1/00 686A; C22F1/00 691B; C22F1/00 692A; C22F1/00 694A; C22F1/00 694B; C22F1/16 Z; B23K9/167 A

According to International Patent Classification (IPC) or to both national classification and IPC

**B. FIELDS SEARCHED**

Minimum documentation searched (classification system followed by classification symbols)
C22C30/02; C22F1/00; C22F1/16; B23K9/167

Documentation searched other than minimum documentation to the extent that such documents are included in the fields searched
Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2017/168904 A1 (NIPPON STEEL & SUMITOMO METAL CORPORATION) 05 October 2017 (2017-10-05) | 1-4 |
| A | CN 103556029 A (LUOYANG SUNRUI SPECIAL EQUIPMENT CO., LTD.) 05 February 2014 (2014-02-05) | 1-4 |
| A | CN 101760687 A (LIAOYANG PETROCHEMICAL MACHINERY DESIGNING & MANUFACTURING) 30 June 2010 (2010-06-30) | 1-4 |
| A | JP 2009-233721 A (KUBOTA CORP) 15 October 2009 (2009-10-15) | 1-4 |
| A | JP 2000-329882 A (HITACHI LTD) 30 November 2000 (2000-11-30) | 1-4 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 April 2023** | **18 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/002694**

**C.**    **DOCUMENTS CONSIDERED TO BE RELEVANT**

| Category* | Citation of document, with indication, where appropriate, of the relevant passages | Relevant to claim No. |
|---|---|---|
| A | JP 55-045555 A (HITACHI SHIPBUILDING ENG CO, HITACHI ZOUSEN HIHAKAI KENSA KK) 31 March 1980 (1980-03-31) | 1-4 |
| A | JP 55-016727 A (BABCOCK HITACHI KK) 05 February 1980 (1980-02-05) | 1-4 |
| A | JP 52-078730 A (HITACHI LTD) 02 July 1977 (1977-07-02) | 1-4 |
| A | JP 2021-021093 A (NIPPON STEEL CORP) 18 February 2021 (2021-02-18) | 1-4 |

Form PCT/ISA/210 (second sheet) (January 2015)

## INTERNATIONAL SEARCH REPORT
### Information on patent family members

International application No.

**PCT/JP2023/002694**

| Patent document cited in search report | | | Publication date (day/month/year) | Patent family member(s) | | | Publication date (day/month/year) |
|---|---|---|---|---|---|---|---|
| WO | 2017/168904 | A1 | 05 October 2017 | US | 2019/0100826 | A1 | |
| | | | | EP | 3438306 | A1 | |
| | | | | KR | 10-2018-0125566 | A | |
| | | | | CN | 109072365 | A | |
| CN | 103556029 | A | 05 February 2014 | (Family: none) | | | |
| CN | 101760687 | A | 30 June 2010 | (Family: none) | | | |
| JP | 2009-233721 | A | 15 October 2009 | (Family: none) | | | |
| JP | 2000-329882 | A | 30 November 2000 | (Family: none) | | | |
| JP | 55-045555 | A | 31 March 1980 | (Family: none) | | | |
| JP | 55-016727 | A | 05 February 1980 | (Family: none) | | | |
| JP | 52-078730 | A | 02 July 1977 | (Family: none) | | | |
| JP | 2021-021093 | A | 18 February 2021 | (Family: none) | | | |

Form PCT/ISA/210 (patent family annex) (January 2015)

## EP 4 471 168 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017168904 A